Europäisches Patentamt

European Patent Office

Office européen des brevets

(11) Veröffentlichungsnummer: **0 231 432 B1**

# EUROPÄISCHE PATENTSCHRIFT

(45) Veröffentlichungstag der Patentschrift: **10.04.91**

(51) Int. Cl.⁵: **B01D 63/00**, //B01D69/00

(21) Anmeldenummer: **86112536.7**

(22) Anmeldetag: **10.09.86**

(54) **Querstrom-Mikrofilter.**

(30) Priorität: **24.12.85 DE 3546091**

(43) Veröffentlichungstag der Anmeldung:
**12.08.87 Patentblatt 87/33**

(45) Bekanntmachung des Hinweises auf die
Patenterteilung:
**10.04.91 Patentblatt 91/15**

(84) Benannte Vertragsstaaten:
**CH FR GB IT LI NL SE**

(56) Entgegenhaltungen:
**DE-A- 2 058 791**
**FR-A- 2 576 805**
**GB-A- 2 150 596**
**US-A- 4 575 406**

(73) Patentinhaber: **KERNFORSCHUNGSZENTRUM KARLSRUHE GMBH**
**Weberstrasse 5 Postfach 3640**
**W-7500 Karlsruhe 1(DE)**

(72) Erfinder: **Ehrfeld, Wolfgang, Dr.**
**Reutstrasse 27**
**W-7500 Karlsruhe 41(DE)**
Erfinder: **Münchmeyer, Dietrich, Dr.**
**Hagäckerstrasse 5**
**W-7513 Stutensee-3(DE)**

## Beschreibung

Die Erfindung betrifft Querstrom-Mikrofilter gemäß dem Oberbegriff des Patentanspruchs 1.

Querstrom-Mikrofilter dienen zum Abtrennen oder Anreichern suspendierter oder emulgierter Teilchen aus bzw. in einer Lösung, beispielsweise von fein verteilten Fällungsprodukten bei chemischen Prozessen oder auch von Mikroorganismen oder von zellulären Bestandteilen. Dabei kann sowohl das Filtrat als auch die an suspendierten oder emulgierten Teilchen angereicherte Lösung das gewünschte Produkt sein. Als Trennelemente werden poröse Membranen vor allem aus Kunststoff, Sinterglas oder Sintermetall eingesetzt, wobei die einzelnen Werkstoffe charakteristische Verteilungen der Porengröße aufweisen. So liegen typische Porengrößenverteilungen für Polypropylen zwischen ca. 0,5 $\mu$m und 1 $\mu$m, für Sinterglas zwischen 3 $\mu$m und 10 $\mu$m. Die Gesamtporosität ist ebenfalls werkstoffspezifisch und liegt typischerweise zwischen ca. 20 % bis 50 % bei Sintermetall, ca. 60 % bei Sinterglas und 60 % bis 85 % bei Kunststoffen, wie Niederdruck-Polyethylen, Polypropylen, Polytetrafluorethylen (s. z.B. A.E.Ostermann, "Querstrom-Mikrofiltration in der industriellen Anwendung. Überblick über derzeitige Werkstoffe und Anwendungsbeispiele aus Abwasserrecycling und chemischer Prozeßtechnik.", Vortragsunterlagen Seminar Nr. 116125, Technische Akademie Wuppertal, Mai 1985).

Trotz dieser hohen Gesamtporosität weisen solche Membranen einen relativ hohen Strömungswiderstand auf. Eine Herabsetzung dieses Strömungswiderstandes durch Verringern der Membrandicke ist aus verschiedenen Gründen nur begrenzt möglich. Eine Mindestdicke muß bereits deshalb vorgegeben werden, damit mit ausreichender Sicherheit gewährleistet ist, daß die Membran nicht auf ihrer ganzen Dicke von einzelnen Kanälen mit zu großen Öffnungen durchsetzt wird, wie sie aufgrund der durch den Herstellungsprozeß bedingten statistischen Porengrößenverteilung zwangsläufig lokal vorkommen. Aber auch aus Festigkeitsgründen muß eine hinreichende Membrandicke vorgesehen werden. Auch sog. Kernspurmembranen, wie sie von der Fa. Nuclepore hergestellt werden, und die eine einheitliche Größe der Porenöffnungen aufweisen, haben einen relativ hohen Strömungswiderstand wegen ihrer geringen Transparenz (Verhältnis der Summe der Porenquerschnitte zur Gesamtoberfläche der Membran).

Der Erfindung liegt die Aufgabe zugrunde, bei einem Querstrom-Mikrofilter der gattungsgemäßen Art die Membran so zu gestalten, daß dem jeweiligen Anwendungszweck entsprechend bei einheitlicher und vorherbestimmbarer Weite der Poren eine große Transparenz - und damit ein geringer Strömungswiderstand - erzielt wird.

Diese Aufgabe wird durch die im Kennzeichen von Patentanspruch 1 enthaltenen Merkmale gelöst. Die hierauf bezogenen Unteransprüche beinhalten vorteilhafte Ausgestaltungen und Weiterbildungen dieser Lösung.

Mit der Erfindung werden die bislang gebräuchlichen Membranen von Querstrom-Mikrofiltern durch solche mit Stegen ersetzt, die durch Abschlußplatten fixiert sind, wobei die Profile der Stege und insbesondere deren gegenseitige Abstände mit großer Genauigkeit bei kleinsten Abmessungen vorgegeben werden können. Diese Abstände definieren die Porenweite und können bis auf ca. 0,1 $\mu$m herabgesetzt werden. Als Werkstoffe können neben Kunststoffen auch galvanisch abscheidbare Metalle und Metallegierungen oder auch keramische Materialien und Gläser verwendet werden.

Die Herstellung derart feiner Strukturen auf röntgentiefenlithographisch-galvanoplastischem Wege (Liga-Technik) bzw. durch die hiervon abgeleitete Abformtechnik gemäß Merkmal c) von Patentanspruch 1 ist u.a. in dem KfK-Bericht 3995 des Kernforschungszentrums Karlsruhe (November 1985) beschrieben und dargestellt. Danach wird z.B. ein röntgenstrahlenempfindlicher Positiv-Resist auf eine metallische Grundplatte aufgebracht und partiell über eine Maske mit Röntgenstrahlen so bestrahlt und entwickelt, daß eine Negativform der herzustellenden Stege entsteht, deren Höhe der Schichtdicke des Positiv-Resists entspricht; sie kann bis zu 2 mm betragen, je nach der Eindringtiefe der Röntgenstrahlung. Anschließend wird die Negativform galvanisch mit einem Metall unter Verwendung der Grundplatte als Elektrode aufgefüllt, worauf das restliche Resist-Material mit einem Lösungsmittel entfernt wird. Bei der Abformtechnik wird ein mit der Liga-Technik hergestelltes Positiv der herzustellenden Steg-Struktur als wiederholt verwendbares Werkzeug mit einem Kunststoff abgeformt, worauf die so entstandene Negativform durch galvanisches Abscheiden von Metall aufgefüllt und der restliche Kunststoff entfernt wird. In beiden Fällen lassen sich extrem genaue und feine Strukturen herstellen mit lateralen Abmessungen im $\mu$m-Bereich bei einer frei wählbaren Höhe bis zu ca. 2 mm. Bei etwas geringeren Höhen lassen sich auch minimale laterale Abmessungen im Submikrometerbereich realisieren. Als Strahlenquelle für diesen Zweck ist insbesondere die Röntgenstrahlung eines Elektronensynchrotrons (Synchrotronstrahlung) geeignet. Im einfachsten Falle kann aber auch die partiell bestrahlte und entwickelte Resistschicht bzw. die abgeformte Kunststoff-Schicht unmittelbar zur Herstellung der Membran bzw. als Membran verwendet werden.

Ausführungsbeispiele der Erfindung werden im folgenden anhand der Zeichnungen erläutert:

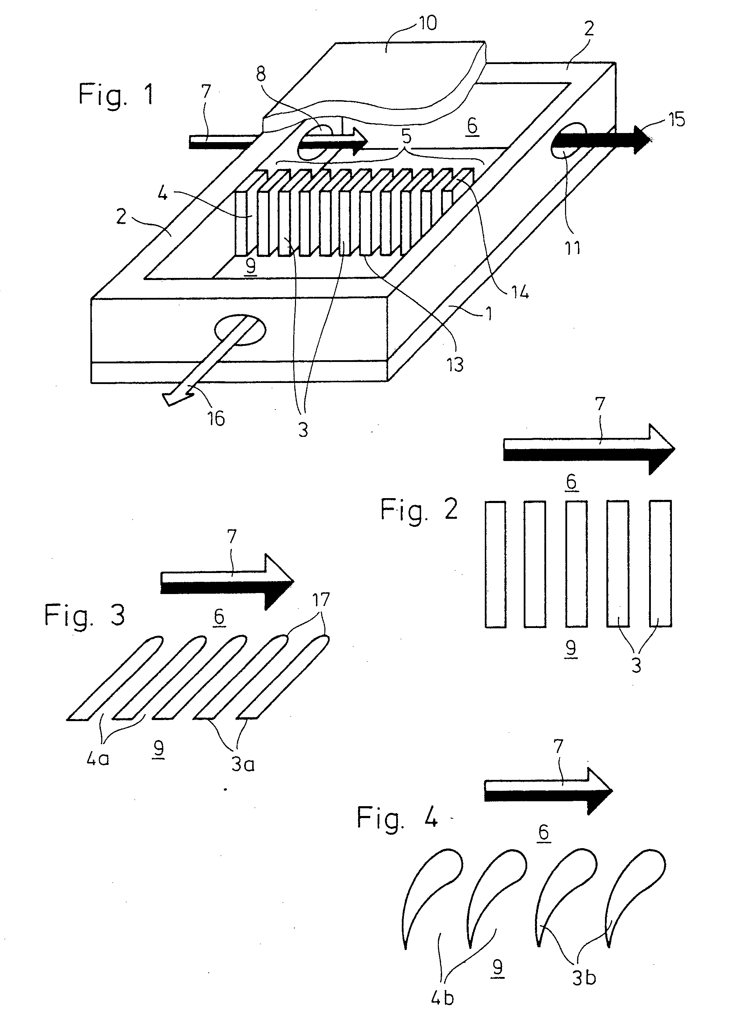

Figur 1 zeigt ein besonders einfaches Beispiel eines Querstrom-Mikrofilters der erfindungsgemäßen Art. Auf einer Grundplatte 1 aus Nickel werden auf röntgentiefenlithografischgalvanoplastischem Weg gleichzeitig Begrenzungswände 2 und eine Vielzahl feiner Stege 3, ebenfalls aus Nickel, hergestellt. Diese feinen Stege 3 haben eine Höhe von 0,5 mm, eine Stegbreite von 3 µm und einen gegenseitigen Abstand von ebenfalls 3 µm. Mit der unteren Stirnfläche 13 haften sie fest auf der als Abschlußplatte dienenden Grundplatte 1. Die Schlitze 4 zwischen den Stegen 3 bilden die Poren der Membran 5. Die Membran 5 trennt den Strömungsraum 6, in dem das zu filternde Fluidum 7 die Membran 5 von der Zuströmseite 8 zu der dieser Seite abgekehrten Seite 11 überströmt, wo das Konzentrat 15 entnommen wird, von Sammelraum 9, aus dem das Filtrat 16 abgeführt wird. Die Begrenzungswände 2 begrenzen den Strömungsraum 6 und den Sammelraum 9 nach den außenliegenden Seiten. Das Querstrom-Mikrofilter wird durch eine obere Abschlußplatte 10 aus Nickel komplettiert, die die oberen Stirnflächen 14 der Stege 3 überdeckt. Die Verbindung erfolgt durch Diffusionslöten.

Die Figuren 2 bis 4 zeigen im Querschnitt verschiedene vorteilhafte Profilformen für die Stege der Membran 5. Eine einfache Ausführung ist in Fig. 2 wiedergegeben. Die Stege 3 haben hier einen rechteckigen Querschnitt und sind in einem Winkel von 90° gegen die Strömungsrichtung des Fluidums 7 im Strömungsraum 6 angestellt. Die Stege 3 der Figur 3 sind dagegen an den der Strömung zugewandten Schmalseiten 17 abgerundet und in einem Winkel von 135° gegen die Strömungsrichtung des Fluidums 7 angestellt. Dadurch ergibt sich zum einen eine Reduzierung der Verstopfungsgefahr der als Poren dienenden Schlitze 4a und zum anderen ergibt sich eine geringere Strömungsbeeinflussung. Ein weiteres vorteilhaftes Stegprofil ist in Fig. 4 wiedergegeben, in der die Stege 3b ein gekrümmtes Profil aufweisen, wobei sich die Querschnitte der Schlitze 4b zum Sammelraum 9 hin erweitern.

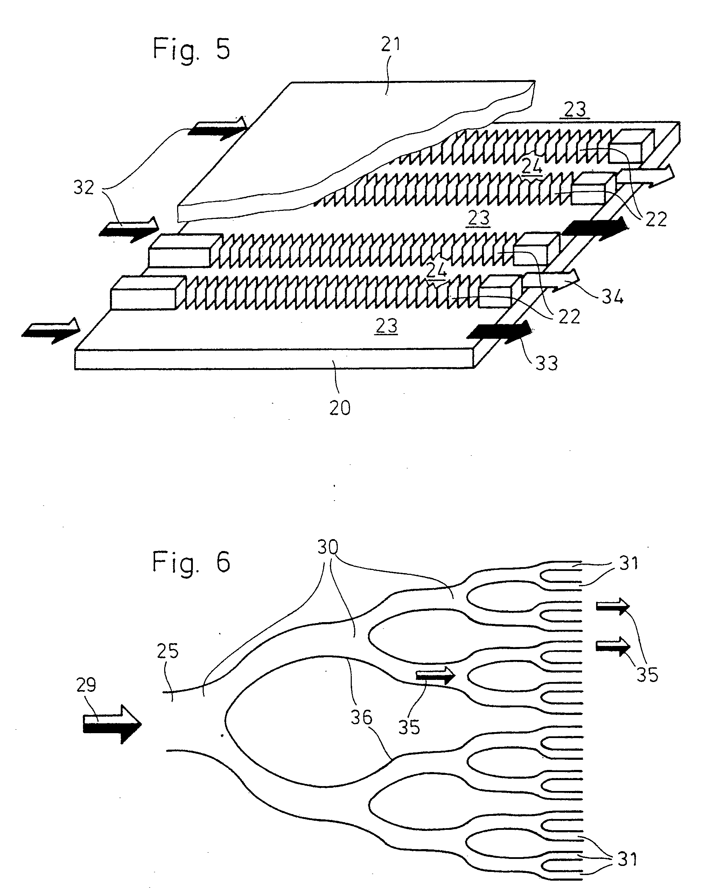

Figur 5 zeigt ein Querstrom-Mikrofilter nach Anspruch 5. Zwischen den beiden gemeinsamen Abschlußplatten 20, 21 befindet sich eine Vielzahl von reihenartigen Steganordnungen 22. Jeweils zwei benachbarte Steganordnungen 22 sind spiegelbildlich zueinander ausgerichtet. Zwischen sich schließen sie jeweils Strömungsräume 23 und Sammelräume 24 ein. Jedem einzelnen Strömungsraum 23 wird von der einen Seite das zu filternde Fluidum 32 zugeführt und an der abgekehrten Seite das Konzentrat 33 entnommen. Ebenfalls an der abgekehrten Seite wird das Filtrat 34 den Sammelräumen 24 entnommen.

Zum Anschluß der einzelnen Strömungsräume 23 an eine gemeinsame Zuströmleitung 25 bzw. an eine gemeinsame Konzentratleitung werden nach Anspruch 6 Zustromverteiler bzw. Konzentratsammler eingesetzt. Eine bevorzugte Ausführungsform eines Zustromverteilers ist in Figur 6 im Querschnitt dargestellt. Vom Hauptstrom 29 erfolgen wiederholt Verzweigungen 30 bis zu letzten Zweigen 31, die jeweils separat an einem Strömungsraum 23 der Figur 5 angeschlossen sind. Die Verzweigungen 30 sind strömungsgünstig ausgeführt, so daß weder größere Scherspannungen noch Totwassergebiete auftreten. Die einzelnen Ströme 35 werden durch Trennwände 36 geführt. Diese Ausführungsform ist besonders für biologisch/medizinische Anwendungen geeignet, wenn z.B. gefordert ist, daß die zellulären Bestandteile eines zu filternden Fluidums nicht geschädigt werden dürfen. Ein spezieller und besonders interessanter Anwendungsfall ist die Abtrennung von Blutplasma aus menschlichem Blut. Der Konzentratsammler kann hierzu spiegelbildlich ausgeführt sein.

Die im Teil c) des Kennzeichens von Anspruch 1 genannten Herstellungsverfahren sind in besonderem Maße dazu geeignet, das Querstrom-Mikrofilter und die Strömungsverteiler aus biokompatiblen Werkstoffen (z.B. Edelmetallen oder Hydrogelen) herzustellen.

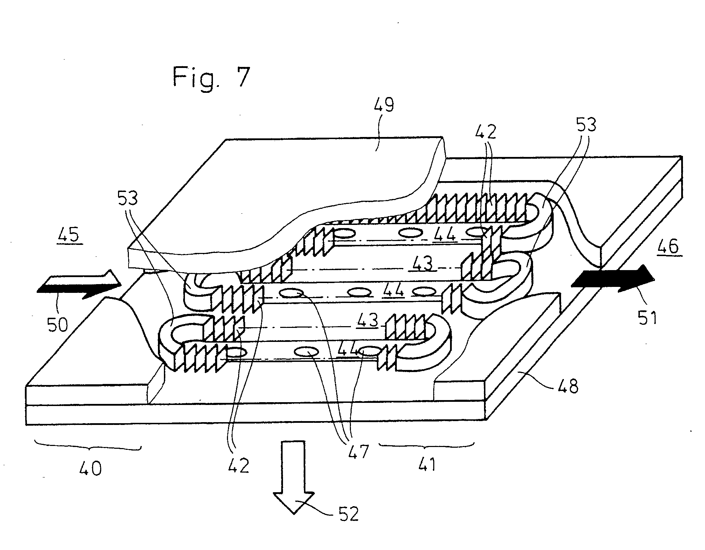

Figur 7 zeigt eine intergrierte Anordnung von einem aus Trennwänden 53 aufgebauten Zustromverteiler 40, einem entsprechenden Konzentratsammler 41 und einer Vielzahl reihenartiger Steganordnungen 42 als Membranen, die zwischen sich Strömungsräume 43 und Sammelräume 44 einschließen. Die gesamte Anordnung wird von zwei gemeinsamen Abdeckplatten 48, 49 nach Anspruch 7 abgedeckt. Der Anschluß für das zu filternde Fluidum 50 und für das Konzentrat 51 erfolgt an den gegenüberliegenden Seiten 45, 46. Das Filtrat 52 wird durch Bohrungen 47 in der einen Abdeckplatte 48 aus den Sammelräumen 44 abgeführt. Dieses kompakte, integrierte Querstrom-Mikrofilter ist vor allem im Hinblick auf die Entwicklung zukünftiger Hämofiltrationseinheiten von sehr großem Interesse.

Die Erfindung ist nicht auf die vorstehenden Anordnungen begrenzt. So kann z.B. auch eine mehrstufige Querstrom-Mikrofiltration durchgeführt werden, indem das zu filternde Fluidum in einer ersten Stufe mit Membranen größerer Schlitzweite vorgefiltert und in einer oder mehreren, nachgeschalteten Stufen mit Membranen feinerer Schlitzweite nachgereinigt wird. Auch können die Stege bezüglich ihres Profils und ihres gegenseitigen Abstandes innerhalb einer Membran variiert werden im Sinne einer Anpassung an die sich längs der Strömung ändernden Eigenschaften, z.B. der Vis-

kosität, des Fluidums.

## Ansprüche

1. Querstrom-Mikrofilter, bestehend aus einem Filtergehäuse mit einem Strömungsraum, dem das zu filternde Fluidum auf einer Seite zugeführt und dem auf der der Zuströmseite abgekehrten Seite das Konzentrat entnommen wird, mit einem Sammelraum (9), aus dem das Filtrat abgeführt wird, sowie mit wenigstens einer mikroporösen Membran (5), deren eine Oberfläche parallel von dem zu filternden Fluidum überströmt wird und deren andere Oberfläche zum Sammelraum (9) weist, wobei die Poren eine Weite von 0,1 bis 30 $\mu$m haben, dadurch gekennzeichnet, daß

   a) die Poren der Membran (5) schlitzförmige Querschnitte (4) aufweisen, die
   b) von einer Vielzahl von in vorherbestimmbaren Abständen reihenartig angeordneten Stegen (3) mit vorgegebenen Profilen und zwei gemeinsamen, die Stirnkante (13, 14) der Stege überdeckenden Abschlußplatten (1, 10) gebildet sind, und daß
   c) die Stege (3) auf röntgentiefenlithographischem, auf röntgentiefenlithographisch-galvanoplastischem oder auf hiervon abgeleitetem abformtechnischem bzw. abformtechnisch-galvanoplastischem Wege auf einer der beiden Abschlußplatten (1, 10) aufgebracht sind.

2. Querstrom-Mikrofilter nach Anspruch 1, dadurch gekennzeichnet, daß die Stege (3) in einem Winkel von 90° bis 135° zur Strömungsrichtung des Fluidums (7) im Strömungsraum (6) angestellt sind.

3. Querstrom-Mikrofilter nach Anspruch 1 oder 2, dadurch gekennzeichnet, daß die an den Strömungsraum (6) angrenzenden Seiten (17) der Stege (3a) abgerundet sind.

4. Querstrom-Mikrofilter nach Anspruch 1 bis 3, dadurch gekennzeichnet, daß die Stege (3) eine Höhe von 0,1 bis 2 mm aufweisen.

5. Querstrom-Mikrofilter nach Anspruch 1 bis 4, gekennzeichnet durch eine Vielzahl von reihenartigen Steganordnungen (22) zwischen zwei gemeinsamen Abschlußplatten (20, 21), wobei jeweils zwei Steganordnungen (22) spiegelbildlich in der Weise zueinander ausgerichtet sind, daß sie zwischen sich jeweils gemeinsame Strömungsräume (23) bzw. Sammelräume (24) einschließen.

6. Querstrom-Mikrofilter nach Anspruch 5, gekennzeichnet durch Zustromverteiler und/oder Konzentratsammler, die von einem Hauptstrom (29) aus wiederholt Verzweigungen (30) aufweisen, deren letzter Zweig (31) jeweils separat an einen Strömungsraum (23) angeschlossen ist, wobei Zustromverteiler bzw. Konzentratsammler aus zwei Platten mit dazwischen angeordneten Aufteilungswänden (36) mit vorgebbaren Profilen und Positionen aufgebaut sind.

7. Querstrom-Mikrofilter nach Anspruch 5 und 6, dadurch gekennzeichnet, daß die Aufteilungswände (53) zusammen mit den reihenartigen Steganordnungen (42) auf einer der Abschlußplatten (48) gemäß Merkmal c) von Anspruch 1 hergestellt und von der anderen Abschlußplatte (49) abgedeckt sind.

## Claims

1. Cross-flow microfilter, comprising a filter housing provided with a flow chamber, to which the fluid to be filtered is supplied at one end and from which the concentrate is removed at the end remote from the inflow end, a collecting chamber (9) from which the filtrate is discharged, and at least one microporous diaphragm (5), one surface of which is traversed in parallel manner by the fluid to be filtered and the other surface of which is orientated towards the collecting chamber (9), the pores having a width of from 0.1 to 30 $\mu$m, characterised in that

   a) the pores of the diaphragm (5) have slot-like cross-sections (4), which
   b) are formed by a plurality of ribs (3), which are disposed in linear manner at predeterminable spacings and are provided with prescribed profiles, and two common end plates (1, 10) which cover the end faces (13, 14) of the ribs, and in that
   c) the ribs (3) are attached to one of the two end plates (1, 10) in a deep X-ray-lithographical manner, in a deep X-ray-lithographic-galvanoplastic manner or in a technically shaping or technically shaping-galvanoplastic manner derived therefrom.

2. Cross-flow microfilter according to claim 1, characterised in that the ribs (3) are positioned in the flow chamber (6) at an angle of 90° to 135° relative to the flow direction of the fluid (7).

3. Cross-flow microfilter according to claim 1 or 2, characterised in that the ends (17) of the ribs (3a) adjacent the flow chamber (6) are rounded.

4. Cross-flow microfilter according to claims 1 to 3, characterised in that the ribs (3) have a height of 0.1 to 2 mm.

5. Cross-flow microfilter according to claims 1 to 4, characterised by the provision of a plurality of linear rib arrangements (22) between two common end plates (20, 21), two rib arrangements (22) at a time being aligned with each other in a mirror-image manner in such a way that they enclose therebetween common flow chambers (23) and collecting chambers (24) respectively.

6. Cross-flow microfilter according to claim 5, characterised by the provision of inflow distributors and/or concentrate collectors, which repeatedly have branch arrangements (30) leading from a main flow (29), the last branch (31) of which branch arrangements communicates separately with a flow chamber (23), inflow distributors or concentrate collectors being formed from two plates having dividing walls (36) disposed therebetween and provided with predeterminable profiles and positions.

7. Cross-flow microfilter according to claims 5 and 6, characterised in that the dividing walls (53), together with the linear rib arrangements (42), are provided on one of the end plates (48), in accordance with feature c) of claim 1, and covered by the other end plate (49).


**Revendications**

1. Microfiltre à courant transversal composé d'un boîtier de filtre avec une chambre d'écoulement qui reçoit par un côté le fluide à filtrer et dont on extrait le concentrat par le côté opposé au côté de l'alimentation, avec une chambre collectrice (9) d'où on extrait le filtrat ainsi qu'au moins une membrane microporeuse (5) dont une face parallèle est balayée par le fluide à filtrer et dont l'autre face est tournée vers la chambre collectrice (9), les pores ayant une largeur de 0,1 à 30 μm, microfiltre caractérisé en ce que :
   a) les pores de la membrane (5) ont des sections (4) en forme de fentes qui :
   b) sont formées par un grand nombre d'entretoises (3) réparties en rangées avec des intervalles prédéterminés et ayant des profils donnés ainsi que deux plaques de recouvrement (1, 10) communes recouvrant les arêtes (13, 14) des entretoises et en ce que :
   c) les entretoises (3) sont réalisées par un procédé de photolithographie par rayons X sur l'une des deux plaques de fermeture (1, 10) par photolithographie aux rayons X et galvanoplastie ou une technique de copie qui en dérive ou une technique de copie galvanoplastique.

2. Microfiltre à courant transversal selon la revendication 1, caractérisé en ce que les entretoises (3) sont disposées par rapport à la direction d'écoulement du fluide (7) dans la chambre d'écoulement (6) suivant un angle compris entre 90° et 135°.

3. Microfiltre à courant transversal selon la revendication 1 ou la revendication 2, caractérisé en ce les côtés (17) des entretoises (3a) adjacentes à la chambre d'écoulement (6) sont arrondis.

4. Microfiltre à courant transversal selon les revendications 1 à 3, caractérisé en ce que les entretoises (3) ont une hauteur de 0,1 à 2 mm.

5. Microfiltre à courant transversal selon les revendications 1 à 4, caractérisé par un grand nombre d'ensembles d'entretoises (22) en série entre deux plaques de fermeture (20, 21) communes, et chaque fois deux ensembles d'entretoises (22) sont alignés symétriquement de manière à délimiter entre eux chaque fois une chambre d'écoulement (23) commune ou une chambre collectrice (24).

6. Microfiltre à courant transversal selon la revendication 5, caractérisé par un distributeur de courant d'alimentation et/ou un collecteur à concentrat qui présente des embranchements (30) répétés partant du courant principal (29) et dont la dernière branche (31) est chaque fois reliée séparément à une chambre d'écoulement (23), le distributeur d'alimentation ou le collecteur à concentrat étant réalisé à partir de deux plaques avec entre elles des cloisons de répartition (36) ayant des profils et des positions prédéterminés.

7. Microfiltre à courant transversal selon la revendication 5 ou 6, caractérisé en ce que les cloisons de répartition (53) ainsi que les dispositions à entretoises (42) en série sont recouvertes par une plaque de fermeture (48) réalisée selon la caractéristique c) de la revendication 1 ainsi que par l'autre plaque de fermeture (49).

Fig. 1

Fig. 2

Fig. 3

Fig. 4

Fig. 5

Fig. 6

Fig. 7